# EUROPEAN PATENT APPLICATION

(11) **EP 4 502 660 A1**
(43) Date of publication of application: **05.02.2025**
(21) Application number: 23779195.9
(22) Date of filing: 02.03.2023
(51) Int. Cl.: G01S 17/89, G01S 17/931, G05D 1/02

(54) **INFORMATION PROCESSING DEVICE, INFORMATION PROCESSING METHOD, AND INFORMATION PROCESSING SYSTEM**

(30) Priority: 29.03.2022 JP 2022054620
(71) Applicant: Sony Group Corporation, Tokyo 108-0075 (JP); Sony Semiconductor Solutions Corporation, Atsugi-shi, Kanagawa 243-0014 (JP)
(72) Inventor: TANAKA, Hirotaka, Tokyo 108-0075 (JP); MIYAZAKI, Tetsuo, Atugi-shi, Kanagawa 243-0014 (JP); MATSUDA, Shoji, Tokyo 108-0075 (JP)
(74) Representative: D Young & Co LLP
(86) International application number: PCT/JP2023/007776
(87) International publication number: WO 2023/189166

(57) **Abstract**

Control for preventing a mobile body such as an autonomous guided vehicle from entering a specific location is achieved easily and inexpensively.

A mask region setting unit sets a mask region not to be subjected to smoothing on a 3D point cloud output from a distance measuring sensor on the basis of an intensity image output from the distance measuring sensor that measures a distance by accumulating reflected light and detecting a phase difference between irradiation light and the reflected light. A smoothing filter processor performs smoothing processing on the 3D point cloud output from the distance measuring sensor. In this case, the 3D point cloud of the set mask region is output as it is without being subjected to the smoothing processing. In the 3D point cloud after smoothing filter processing, it is possible to leave the 3D point cloud related to erroneous depth detection only in a necessary region, and by using the 3D point cloud, control for preventing a mobile body such as, for example, an autonomous guided vehicle from entering a specific location can be achieved easily and inexpensively.

## Description

### TECHNICAL FIELD

The present technology relates to an information processing apparatus, an information processing method, and an information processing system, and particularly to an information processing apparatus and the like that is applicable to behavior control of a mobile body such as an autonomous guided vehicle.

### BACKGROUND ART

In recent years, autonomous guided vehicles (AGVs) have been active in sites such as distribution warehouses and factories. In order to prevent an autonomous guided vehicle from entering a specific location, for example, it is conceivable to cause the autonomous guided vehicle to recognize the specific location by image recognition and not to enter the specific location. In this case, there is assumed a problem that prior data acquisition and machine learning are required, advanced expertise is required for introduction, a high-performance calculation device is required, and power consumption increases. For example, Patent Document 1 discloses that reliability of a distance measurement value decreases at a boundary between an object and a background.

### CITATION LIST

### PATENT DOCUMENT

Patent Document 1: International Patent Publication No. 2021/176872 A

### SUMMARY OF THE INVENTION

### PROBLEMS TO BE SOLVED BY THE INVENTION

An object of the present technology is to easily and inexpensively achieve control for preventing a mobile body such as an autonomous guided vehicle from entering a specific location.

### SOLUTIONS TO PROBLEMS

A concept of the present technology is
an information processing apparatus including
a mask region setting unit that sets a mask region not to be subjected to smoothing on a 3D point cloud output from a distance measuring sensor on the basis of an intensity image output from the distance measuring sensor that measures a distance by accumulating reflected light and detecting a phase difference between irradiation light and the reflected light, and
a smoothing filter processor that performs smoothing processing on the 3D point cloud output from the distance measuring sensor and outputs the 3D point cloud, in which
the smoothing filter processor outputs the 3D point cloud of the mask region having been set as it is without performing the smoothing processing.

In the present technology, the mask region setting unit sets the mask region in which smoothing is not performed on the 3D point cloud output from the distance measuring sensor on the basis of the intensity image output from the distance measuring sensor that measures the distance by accumulating reflected light and detecting a phase difference between irradiation light and the reflected light. The distance measuring sensor may include, for example, an iToF distance measuring sensor. Then, the smoothing filter processor performs the smoothing processing on the 3D point cloud output from the distance measuring sensor. In this case, the 3D point cloud of the set mask region is output as it is without being subjected to the smoothing processing.

For example, the mask region setting unit may extract a characteristic shape from the intensity image and set the mask region in association with a region of the extracted characteristic shape. By setting the mask region in association with the region of the characteristic shape extracted from the intensity image in this manner, it is possible to use the 3D point cloud related to the erroneous depth detection of the region of the characteristic shape. For example, in a case where a tape having a pattern associated with the characteristic shape is attached so as to surround a specific location, it is possible to configure a virtual barricade on the 3D point cloud related to the erroneous depth detection and to easily and inexpensively achieve control for preventing the mobile body such as an autonomous guided vehicle from entering the specific location.

In addition, for example, the mask region setting unit may set the mask region in association with the region of the characteristic shape when a contrast of the region of the characteristic shape is equal to or greater than a threshold value. As a result, in a case where there is a portion having a similar pattern in the environment in addition to the pattern corresponding to the characteristic shape of the tape attached by the user, a characteristic shape can be prevented from being extracted from the intensity image corresponding to the portion, and an erroneous mask region can be prevented from being set.

In addition, for example, the mask region setting unit may set the mask region in association with the region of the characteristic shape when a distance to the region of the characteristic shape is less than a threshold value. As a result, when the distance to the region of the characteristic shape is equal to or greater than the threshold value, the mask region associated with the region of the characteristic shape can be prevented from being set, and the 3D point cloud related to the erroneous depth detection that is unnecessary for behavior determination can be deleted by the smoothing processing, and a load of the behavior determination using the 3D point cloud of the mobile body such as an autonomous guided vehicle can be reduced.

As described above, in the present technology, the smoothing processing is performed on the 3D point cloud output from the distance measuring sensor, the mask region is set on the basis of the intensity image, the mask region is output without being subjected to the smoothing processing. The 3D point cloud related to the erroneous depth detection can be left only in the necessary region in the 3D point cloud after smoothing filter processing, and the control for preventing the mobile body such as, for example, an autonomous guided vehicle from entering the specific location can be achieved easily and inexpensively by using the 3D point cloud.

Note that, the present technology may further include, for example, a behavior determiner that sets an entry prohibition region on the basis of the 3D point cloud output from the smoothing filter processor and determines a behavior of the mobile body. In this case, the entry prohibition region is set by using the 3D point cloud related to the erroneous depth detection included in the 3D point cloud output from the smoothing filter processor as the virtual barricade, and control for preventing the mobile body such as an autonomous guided vehicle from entering the specific location can be achieved easily and inexpensively.

Note that another concept of the present technology is
an information processing method including
a mask region setting procedure of setting a mask region not to be subjected to smoothing on a 3D point cloud output from a distance measuring sensor on the basis of an intensity image output from the distance measuring sensor that measures a distance by accumulating reflected light and detecting a phase difference between irradiation light and the reflected light, and
a smoothing filter processing procedure of performing smoothing processing on the 3D point cloud output from the distance measuring sensor and outputs the 3D point cloud, in which
the smoothing filter processing procedure includes outputting the 3D point cloud of the mask region having been set as it is without performing the smoothing processing.

In addition, still another concept of the present technology is
an information processing system including
a display device,
an instruction device that instructs the display device to display a regular pattern, and
an information processing apparatus that performs distance measurement in an environment including the display device, in which
the information processing apparatus includes
a distance measuring sensor that measure a distance by accumulating reflected light and detecting a phase difference between irradiation light and the reflected light,
a mask region setting procedure of extracting a characteristic shape from an intensity image output from the distance measuring sensor, and setting a mask region not to be subjected to smoothing on a 3D point cloud output from the distance measuring sensor in association with the region of the characteristic shape having been extracted, and
a smoothing filter processor that performs the smoothing processing on the 3D point cloud output from the distance measuring sensor and outputs the 3D point cloud, and
the smoothing filter processor outputs the 3D point cloud of the mask region having been set as it is without performing the smoothing processing.

The present technology can cause the display device to display a regular pattern in a specific situation in response to an instruction of the instruction device. The instruction device may include, for example, a user terminal or a network server. In a case where a regular pattern is displayed on the display device, the 3D point cloud related to erroneous depth detection can be generated in a region corresponding to the pattern in the 3D point cloud after smoothing filter processing, and it is possible to perform control for preventing a mobile body such as, for example, an autonomous guided vehicle from entering a specific location by using the 3D point cloud.

### BRIEF DESCRIPTION OF DRAWINGS

Fig. 1 is a block diagram illustrating a configuration example of a mobile body system as a first embodiment.
Fig. 2 is a diagram for describing an intensity image and a 3D point cloud output from an iToF sensor.
Fig. 3 is a block diagram illustrating an example of a drive control device included in an autonomous guided vehicle.
Fig. 4 is a flowchart illustrating an example of a processing procedure in the drive control device.
Fig. 5 is a flowchart illustrating another example of the processing procedure in the drive control device.
Fig. 6 is a block diagram illustrating a configuration example of a mobile body system as a second embodiment.
Fig. 7 is a block diagram illustrating an example of a drive control device included in an autonomous guided vehicle, an instruction device, and a display device.
Fig. 8 is a block diagram illustrating a hardware configuration example of a computer.

### MODE FOR CARRYING OUT THE INVENTION

Hereinafter, a mode for carrying out the invention (hereinafter referred to as an "embodiment") will be described. Note that the description will be made in the following order.
1. First embodiment
2. Second embodiment
3. Modifications

### <1. First embodiment>

### [Configuration of mobile body system]

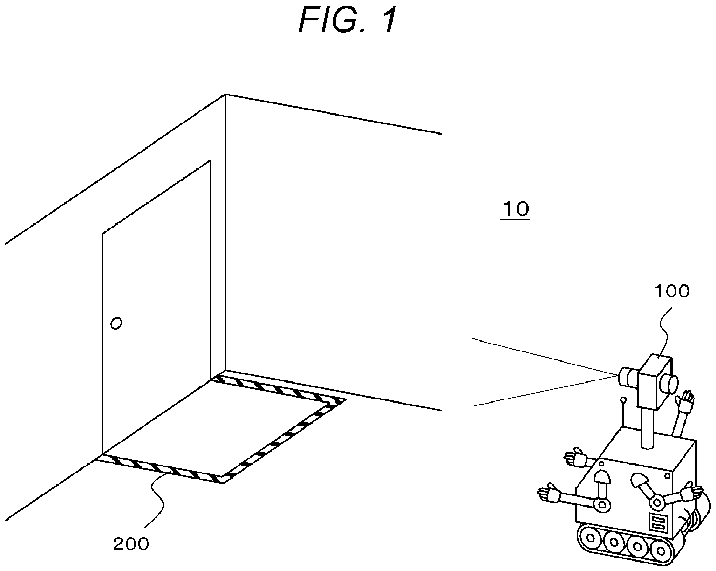

Fig. 1 illustrates a configuration example of a mobile body system 10 as a first embodiment. The mobile body system 10 includes an autonomous guided vehicle (conveyance robot) 100 as a mobile body and a black-and-white stripe tape 200 attached to a floor surface.

The tape 200 is attached so as to surround a portion where the autonomous guided vehicle 100 is prevented from entering. Note that the pattern of the tape 200 is not limited to the black-and-white stripe pattern, and may be a yellow-and-black stripe pattern, and may be a stripe pattern using colors having a contrast difference. Furthermore, the pattern of the tape 200 is not limited to a stripe pattern, and may be any regular pattern, and may be, for example, a polka dot pattern, a zigzag pattern, a wave pattern, or the like.

The autonomous guided machine 100 includes an in-direction time of flight (iToF) sensor as a distance measuring sensor. The iToF sensor is a distance measuring sensor that measures a distance by accumulating reflected light and detecting a phase difference between irradiation light and reflected light. Note that a distance measuring sensor that measures a distance on a similar principle may be provided instead of the iToF sensor, but the following description will be made on the assumption that an iToF sensor is provided.

In the iToF sensor, erroneous depth detection may occur in a high-contrast portion of an intensity image. Then, this phenomenon is known to be a phenomenon that occurs due to the principle of measurement of iToF, that is, a large change in a confidence value during phase measurement, and appears more remarkably as a moving speed of the autonomous guided vehicle 100 is faster.

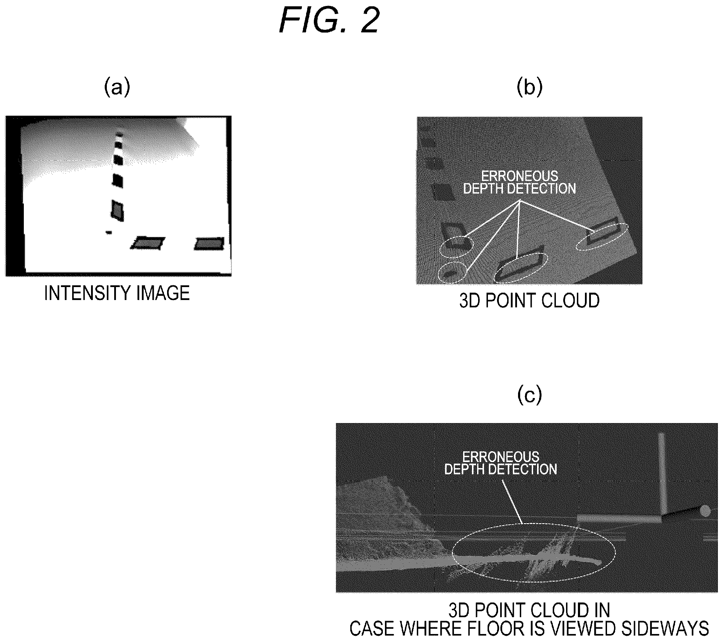

Fig. 2(a) illustrates an example of the intensity image output from the iToF sensor when the distance to the region to which the tape 200 is attached is measured. The intensity image represents the intensity of light detected by the iToF sensor (image sensor), and the intensity becomes brighter as the detected light is stronger. In addition, the intensity image may be referred to as a confidence image. The intensity image represents the reliability of the 3D point cloud of each unit output from the iToF sensor, and the brighter the intensity image, the higher the confidence value (reliability).

In the intensity image illustrated in Fig. 2(a), a black-and-white shape (pattern) corresponding to the black-and-white stripe pattern of the tape 200 exists as a characteristic shape, a high-contrast portion exists in a region of the characteristic shape, and erroneous depth detection occurs in the portion. Fig. 2(b) illustrates an example of a 3D point cloud corresponding to the black-and-white stripe pattern of the tape 200, and erroneous depth detection occurs. Fig. 2(c) illustrates the 3D point cloud illustrated in Fig. 2(b) in a state where the floor is viewed sideways. It can be seen that a point cloud protrudes from the floor surface although there should be nothing actually.

In Fig. 1 again, the autonomous guided vehicle 100 recognizes a point protruding from the floor surface due to erroneous depth detection occurring in the region to which the tape 200 is attached as a virtual barricade (obstacle that does not actually exist), and determines behavior to avoid collision with the virtual barricade. As a result, the autonomous guided vehicle 100 is prevented from entering the location surrounded by the tape 200. That is, the autonomous guided vehicle 100 performs control to prevent entry into the location surrounded by the tape 200.

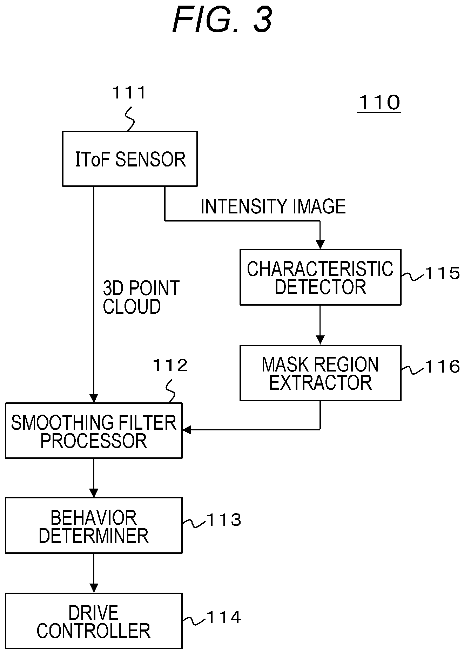

Fig. 3 illustrates an example of a drive control device 110 included in the autonomous guided vehicle 100. The drive control device 110 includes an iToF sensor (iToF camera) 111, a smoothing filter processor 112, a behavior determiner 113, a drive controller 114, a characteristic detector 115, and a mask region extractor 116.

As is well known, the iToF sensor 111 images an environment and measures a distance for each pixel, and outputs an intensity image and a 3D point cloud.

The smoothing filter processor 112 performs smoothing processing on the 3D point cloud (3D point cloud data) output from the iToF sensor 111 and outputs the 3D point cloud. Here, the smoothing processing is not only simple averaging processing but also noise removal processing such as a low-pass filter or a Kalman filter. By this smoothing processing, erroneous points due to erroneous depth detection included in the 3D point cloud output from the iToF sensor 111 are deleted.

On the basis of the 3D point cloud (3D point cloud data) output from the smoothing filter processor 112, the behavior determiner 113 confirms the situation around the autonomous guided vehicle 100 and determines the behavior of the autonomous guided vehicle 100. In this case, if there is an obstacle, an entry prohibited region is set, and a moving speed and a moving route are calculated so as to avoid collision. On the basis of the determination of the behavior determiner 113, the drive controller 114 controls operation of a drive system of the autonomous guided vehicle 100 so as to move, for example, on the basis of the calculated moving speed and moving route.

The characteristic detector 115 extracts a characteristic shape from the intensity image (intensity image data) output from the smoothing filter processor 112. In this case, the characteristic detector 115 extracts a characteristic shape on the basis of characteristic shape data. This characteristic shape is a black-and-white shape corresponding to the black-and-white stripe pattern of the tape 200.

The mask region extractor 116 sets a region not to be subjected to the smoothing processing on the 3D point cloud, that is, a mask region, in association with the region of the characteristic shape extracted by the characteristic detector 115. In this case, a three-dimensional region is set as the mask region so as to include a point cloud corresponding to the region of the extracted characteristic shape.

The mask region extractor 116 notifies the smoothing filter processor 112 of the mask region. The smoothing filter processor 112 outputs the 3D point cloud of the mask region as it is without performing the smoothing processing, and outputs the 3D point cloud of the region other than the mask region after performing the smoothing processing.

In the drive control device 110 illustrated in Fig. 3, the characteristic detector 115 extracts a black-and-white shape associated with the black-and-white stripe pattern of the tape 200 (see Fig. 1) as a characteristic shape from the intensity image output from the iToF sensor 111, the mask region extractor 116 sets a mask region in association with the characteristic shape, and the smoothing filter processor 112 performs smoothing processing on the 3D point cloud output from the iToF sensor 111 except for the mask region.

Therefore, the 3D point cloud output from the smoothing filter processor 112 includes a point protruded from the floor surface due to erroneous depth detection occurring in the region to which the tape 200 is attached. Therefore, in the behavior determiner 113, a point protruding from the floor surface included in the 3D point cloud is recognized as a virtual barricade (obstacle that does not actually exist), the entry prohibited region is set so as to avoid collision with the point, and the moving speed and the moving route are calculated. Then, the drive controller 114 controls the operation of the drive system of the autonomous guided vehicle 100 so as to move on the basis of the moving speed and the moving route calculated by the behavior determiner 113. Accordingly, the autonomous guided vehicle 100 is prevented from entering the location surrounded by the tape 200.

Note that it is also conceivable that the mask region extractor 116 sets the mask region when the contrast of the region of the extracted characteristic shape is equal to or greater than a threshold value, instead of setting the mask region in association with all the regions of the characteristic shape extracted by the characteristic detector 115. As a result, in a case where there is a portion having a similar pattern in the environment in addition to the pattern corresponding to the characteristic shape of the tape 200 attached by the user, a characteristic shape can be prevented from being extracted from the intensity image corresponding to the portion, and an erroneous mask region can be prevented from being set.

In addition, it is also conceivable that the mask region extractor 116 sets the mask region in association with the region of the characteristic shape when the distance to the region of the characteristic shape is smaller than a threshold value, instead of setting the mask region in association with all of the regions of the characteristic shape extracted by the characteristic detector 115. As a result, when the distance to the region of the characteristic shape is equal to or greater than the threshold value, the mask region associated with the region of the characteristic shape can be prevented from being set, and the 3D point cloud related to the erroneous depth detection that is still far from a pasting position of the tape 200 and is not yet necessary for behavior determination can be deleted by the smoothing processing, and a load of the behavior determination using the 3D point cloud in the behavior determiner 113 can be reduced.

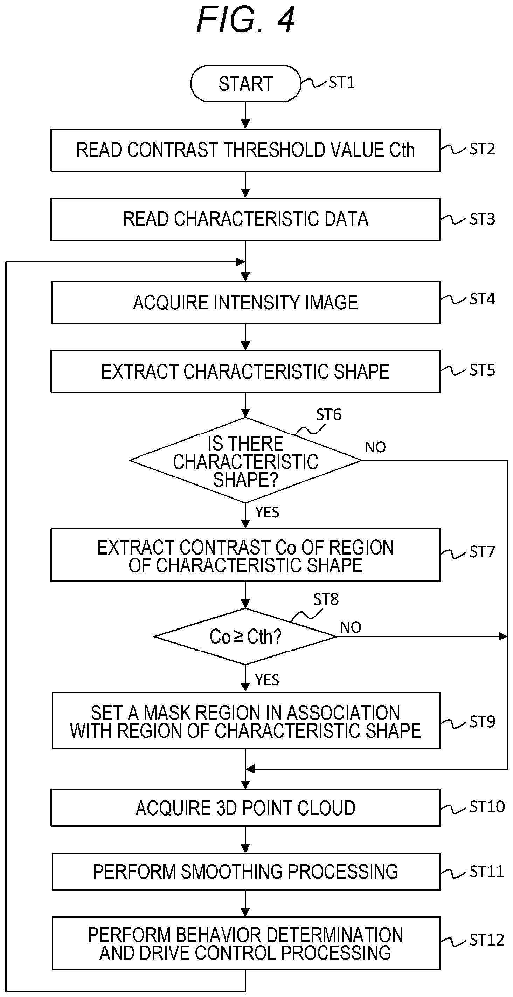

The flowchart in Fig. 4 illustrates an example of a processing procedure in the drive control device 110 illustrated in Fig. 3. First, in step ST1, the drive control device 110 starts the processing. Next, the drive control device 110 reads a contrast threshold value Cth from a storage medium in step ST2, and reads characteristic data from the storage medium in step ST3.

Next, in step ST4, the drive control device 110 acquires an intensity image of a certain frame from the iToF sensor 111. Note that an intensity image and a 3D point cloud are output from the iToF sensor 111 at, for example, 30 frames per second.

Next, in step ST5, the drive control device 110 extracts a characteristic shape from the intensity image acquired in step ST4 on the basis of the characteristic data read in step ST3.

Next, in step ST6, the drive control device 110 determines whether or not there is a characteristic shape. In a case where there is a characteristic shape, in step ST7, the drive control device 110 extracts a contrast Co of the region of the characteristic shape extracted in step ST5. The contrast Co is a difference between a maximum brightness and a minimum brightness in the region of the characteristic shape.

Next, in step ST8, the drive control device 110 determines whether or not the contrast Co is equal to or greater than the contrast threshold value Cth read in step ST2. When the contrast Co is equal to or greater than the contrast threshold value Cth, the drive control device 110 sets a region not to be subjected to the smoothing processing on the 3D point cloud, that is, a mask region, in association with the region of the characteristic shape in step ST9.

Next, the drive control device 110 proceeds to processing of step ST10. When there is no characteristic shape in step ST6 described above, or when the contrast Co is not equal to or greater than the contrast threshold value Cth in step ST8, the processing immediately proceeds to processing of step ST10. In step ST10, the drive control device 110 acquires a 3D point cloud of a frame corresponding to the intensity image of a certain frame acquired in step ST4 from the iToF sensor 111.

Next, in step ST11, the drive control device 110 performs smoothing processing on the 3D point cloud acquired in step ST10. In this case, when the mask region is set in step ST9, the smoothing processing is not performed on the 3D point cloud of the mask region.

Next, in step ST12, the drive control device 110 confirms the situation around the autonomous guided vehicle 100 on the basis of the 3D point cloud after the smoothing processing, determines the behavior of the autonomous guided vehicle 100, and calculates the moving speed and the moving route of the autonomous guided vehicle 100. In this case, when a point protruding from the floor surface due to erroneous depth detection is included in the 3D point cloud, the point is recognized as a virtual barricade (obstacle that does not actually exist), a behavior is determined so as to avoid collision with the point, and the moving speed and the moving route are calculated. In addition, in step ST12, the drive control device 110 controls the operation of the drive system of the autonomous guided vehicle 100 so as to move on the basis of the calculated moving speed and moving route.

After the processing of step ST12, the drive control device 110 returns to the processing of step ST4, and repeats similar processing as described above for the intensity image and the 3D point cloud in the next frame. Note that a repetition cycle of the processing may be performed not on a frame-by-frame basis but on a longer cycle.

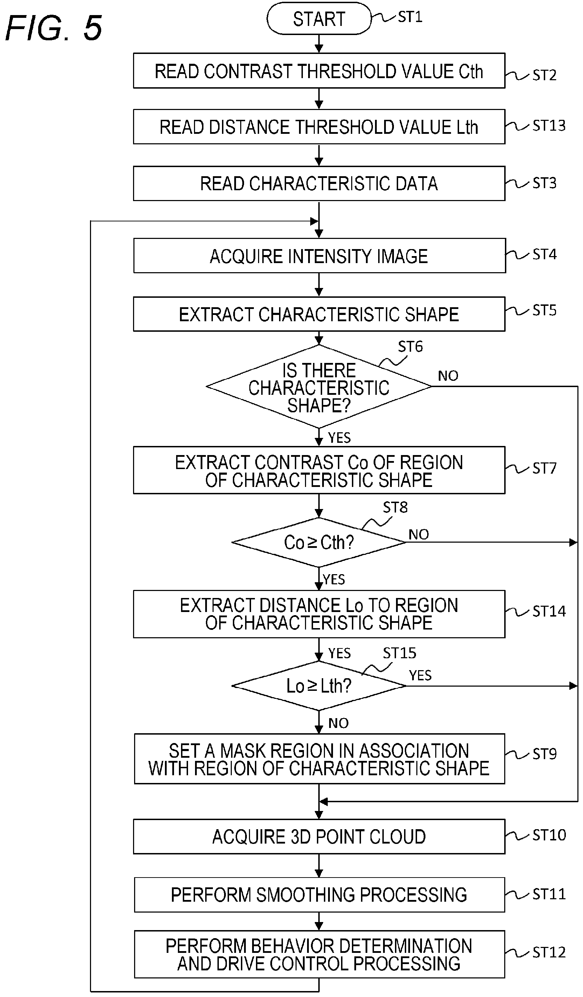

The flowchart in Fig. 5 illustrates another example of the processing procedure in the drive control device 110 illustrated in Fig. 3. In Fig. 5, steps corresponding to steps in Fig. 4 are assigned with the same reference signs.

In the processing procedure illustrated in the flowchart of Fig. 5, after the processing of step ST2, the drive control device 110 reads a distance threshold value Lth from the storage medium in step ST13, and then moves to the processing of step ST3.

Furthermore, in the processing procedure illustrated in the flowchart of Fig. 5, when the contrast Co is equal to or greater than the contrast threshold value Cth in step ST8, the drive control device 110 extracts a distance Lo to the region of the characteristic shape in step ST14. Next, in step ST15, the drive control device 110 determines whether or not the distance Lo is equal to or greater than the distance threshold value Lth.

Then, the drive control device 110 proceeds to the processing of step ST9 when the distance Lo is not equal to or larger than the distance threshold value Lth, and proceeds to the processing of step ST10 without setting the mask region when the distance Lo is equal to or larger than the distance threshold value Lth.

In the processing procedure illustrated in the flowchart of Fig. 4, when there is a characteristic shape in the intensity image and the contrast Co is equal to or larger than the contrast threshold value Cth, the mask region is set in association with the region of the characteristic shape. However, in the processing procedure illustrated in the flowchart of Fig. 5, when there is a characteristic shape in the intensity image, the contrast Co of the region of the characteristic shape is equal to or larger than the contrast threshold value Cth, and the distance Lo of the region of the characteristic shape is not equal to or larger than the distance threshold value Cth, the mask region is set in association with the region of the characteristic shape.

As described above, in the mobile body system 10 illustrated in Fig. 1, the autonomous guided vehicle 100 recognizes a point protruding from the floor surface due to erroneous depth detection occurring in the region to which the tape 200 is attached as a virtual barricade (obstacle that does not actually exist), determines a behavior so as to avoid collision with the point, calculates the moving speed and the moving route, and controls the operation of the drive system. Therefore, the autonomous guided vehicle 100 can be prevented from entering the location surrounded by the tape 200. That is, by simply attaching the tape 200 around a location where the autonomous guided vehicle 100 is desired to be prevented from entering, it is possible to easily and inexpensively prevent the autonomous guided vehicle 100 from entering the location.

In this case, as compared with a case where control is performed so as not to enter a specific location by recognizing the specific location by image recognition, prior data acquisition and machine learning are not required, a high-performance calculation device is not required, power consumption can be suppressed, and control for preventing the autonomous guided vehicle 100 from entering the specific location can be achieved easily and inexpensively. In addition, in this case, the tape 200 stuck to the floor for a person has no physical unevenness, and is safe because there is no risk of stumbling during traveling.

### <2. Second embodiment>

### [Configuration of mobile body system]

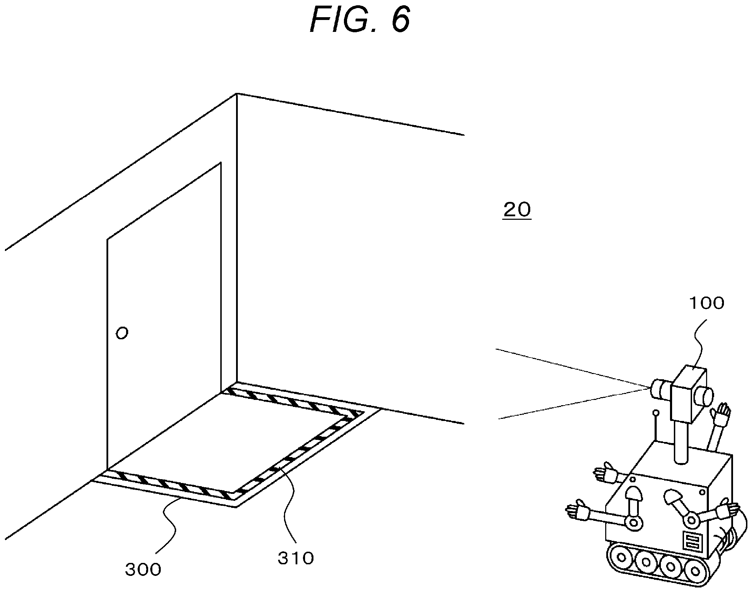

Fig. 6 illustrates a configuration example of a mobile body system 20 as a second embodiment. In Fig. 6, portions corresponding to portions in Fig. 1 are denoted by the same reference signs, and detailed description of the portions is appropriately omitted. The mobile body system 20 includes the autonomous guided vehicle (conveyance robot) 100 as a mobile body and a display device 300 embedded in the floor surface.

The display device 300 includes a liquid crystal display panel or the like. In response to an instruction from an instruction device, for example, a user terminal or a network server, the display device 300 displays a tape-shaped black-and-white stripe pattern 310 so as to be in a state similar to the state in which black-and-white pattern tape 200 is pasted on the floor surface in the mobile body system 10 in Fig. 1 described above. This display is performed in a situation where it is desired to prevent the autonomous guided vehicle 100 from entering a location surrounded by the tape-shaped black-and-white stripe pattern 310.

Note that the pattern displayed on the display device 300 is not limited to the black-and-white stripe pattern, and may be a yellow-and-black stripe pattern, and may be a stripe pattern using colors having a contrast difference. Furthermore, the pattern displayed on the display device 300 is not limited to a stripe pattern, and may be any regular pattern, and may be, for example, a polka dot pattern, a zigzag pattern, a wave pattern, or the like.

In a state where the tape-shaped black-and-white stripe pattern 310 is displayed on the display device 300, similarly to the mobile body system 10 in Fig. 1 described above, the autonomous guided vehicle 100 recognizes a point protruding from the floor surface due to erroneous depth detection occurring in a region of the tape-shaped black-and-white stripe pattern 310 displayed on the display device 300 as a virtual barricade (obstacle that does not actually exist), and determines a behavior to avoid collision with the virtual barricade. As a result, the autonomous guided vehicle 100 is prevented from entering the location surrounded by the tape-shaped black-and-white stripe pattern 310. That is, the autonomous guided vehicle 100 performs control for preventing entry into the location surrounded by the tape-shaped black-and-white stripe pattern 310.

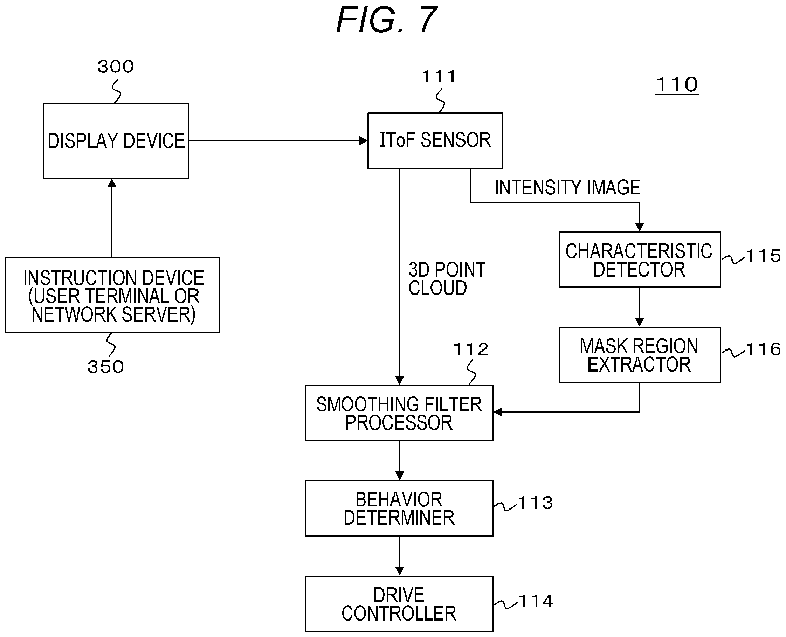

Fig. 7 illustrates an example of the drive control device 110 included in the autonomous guided vehicle 100, the display device 300, and an instruction device 350. The instruction device 350 instructs the display device 300 to display the tape-shaped black-and-white stripe pattern 310. Although detailed description is omitted, the drive control device 110 is configured in a similar manner and operates in a similar manner to the above description with reference to Fig. 3.

As described above, in the mobile body system 20 illustrated in Fig. 6, the autonomous guided vehicle 100 recognizes a point protruding from the floor surface due to erroneous depth detection occurring in the region of the tape-shaped black-and-white stripe pattern 310 displayed on the display device 300 as a virtual barricade (obstacle that does not actually exist), determines a behavior so as to avoid collision with the point, calculates the moving speed and the moving route, and controls the operation of the drive system. Therefore, by displaying the tape-shaped black-and-white stripe pattern 310 on the display device 300 in a specific situation, the autonomous guided vehicle 100 can be prevented from entering the location surrounded by the tape-shaped black-and-white stripe pattern 310.

Note that, in the above description, an example has been described in which the tape-shaped black-and-white stripe pattern 310 is displayed by the display device 300 including, for example, a liquid crystal display panel. Alternatively, it is also conceivable to perform similar display by other display devices, for example, a display device in which a plurality of LEDs is arranged.

### [Processing by software of computer]

The processing illustrated in the flowcharts of Figs. 4 and 5 described above can be executed by hardware, or can also be executed by software. In a case where the series of processing is executed by software, a program constituting the software is installed from a recording medium into, for example, a computer built into dedicated hardware or a general-purpose computer capable of executing various functions by installing various programs.

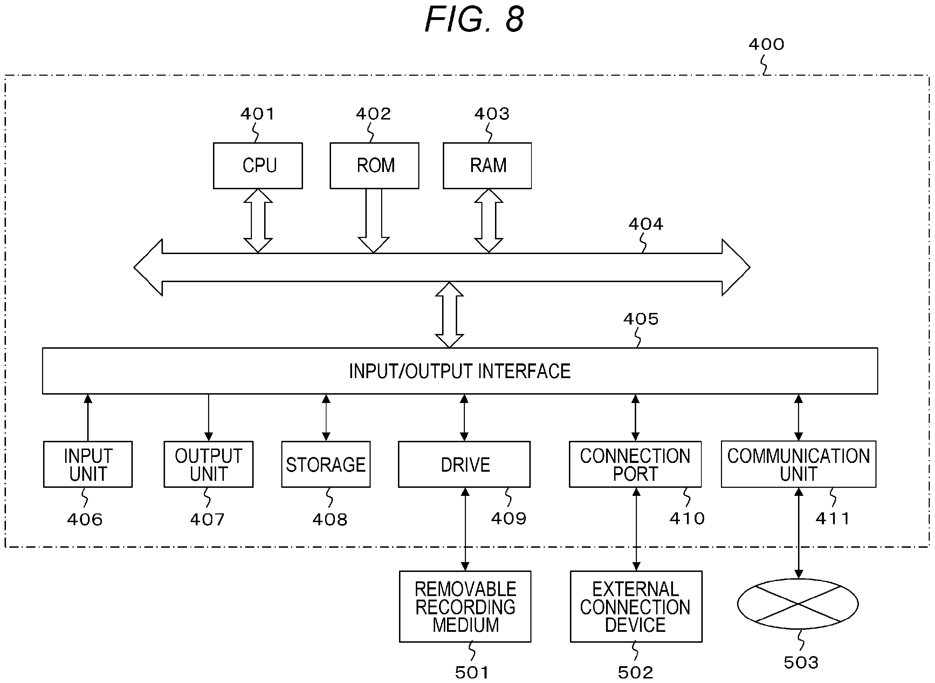

Fig. 8 is a block diagram illustrating a hardware configuration example of a computer 400. The computer 400 includes a CPU 401, a ROM 402, a RAM 403, a bus 404, an input/output interface 405, an input unit 406, an output unit 407, a storage 408, a drive 409, a connection port 410, and a communication unit 411. Note that, the hardware configuration illustrated here is an example, and some of the components may be omitted. In addition, components other than the components illustrated here may be further included.

The CPU 401 functions as, for example, a calculation processing device or a control device, and controls all or some of the operations of the components on the basis of various programs recorded in the ROM 402, the RAM 403, the storage 408, or a removable recording medium 501.

The ROM 402 is a device that stores a program to be read by the CPU 401, data to be used for calculation, and the like. The RAM 403 temporarily or permanently stores, for example, a program to be read by the CPU 401, various parameters that change as appropriate when the program is executed, and the like.

The CPU 401, the ROM 402, and the RAM 403 are connected to each other via the bus 404. In addition, various components are connected to the bus 404 via the interface 405.

As the input unit 406, for example, a mouse, a keyboard, a touch panel, a button, a switch, a lever, and the like are used. Furthermore, as the input unit 406, a remote controller capable of transmitting a control signal by using infrared rays or other radio waves may be used.

The output unit 407 is a device capable of visually or audibly notifying the user of acquired information, such as a display device such as, for example, a cathode ray tube (CRT), an LCD, or an organic EL, an audio output device such as a speaker or a headphone, a printer, a mobile phone, or a facsimile.

The storage 408 is a device for storing various types of data. As the storage 408, for example, a magnetic storage device such as a hard disk drive (HDD), a semiconductor storage device, an optical storage device, a magneto-optical storage device, or the like is used.

The drive 409 is, for example, a device that reads information recorded in the removable recording medium 501 such as a magnetic disk, an optical disc, a magneto-optical disk, or a semiconductor memory, or writes information to the removable recording medium 501.

The removable recording medium 501 is, for example, a DVD medium, a Blu-ray (registered trademark) medium, an HD-DVD medium, various types of semiconductor storage media, or the like. It is needless to say that the removable recording medium 501 may be, for example, an IC card mounted with a non-contact IC chip, an electronic device, or the like.

The connection port 410 is, for example, a port for connecting an external connection device 502 such as a universal serial bus (USB) port, an IEEE1394 port, a small computer system interface (SCSI), an RS-232C port, or an optical audio terminal. The external connection device 502 is, for example, a printer, a portable music player, a digital camera, a digital video camera, an IC recorder, or the like.

The communication unit 411 is a communication device for connection to a network 503, for example, a communication card for wired or wireless LAN, Bluetooth (registered trademark), or wireless USB (WUSB), a router for optical communication, a router for asymmetric digital subscriber line (ADSL), a modem for various communications, or the like.

Note that the program executed by the computer may be a program in which processing is performed in time series in the order described in the present specification or may be a program in which processing is performed in parallel or at necessary timing such as when a call is made.

### <3. Modifications>

Note that the preferred embodiments of the present disclosure have been described in detail with reference to the accompanying drawings, but the technical scope of the present disclosure is not limited to such examples. It is apparent that a person having ordinary knowledge in the technical field of the present disclosure can achieve various type of examples of changes or modifications within the scope of the technical idea recited in the claims, and it will be naturally understood that such examples also belong to the technical scope of the present disclosure.

Furthermore, the effects described in the present specification are merely exemplary or illustrative, and not restrictive. That is, the technology of the present disclosure can exhibit other effects apparent to those skilled in the art from the description of the present specification, in addition to the effects described above or instead of the effects described above.

In addition, the present technology can also have the following configurations.
(1) An information processing apparatus including
   a mask region setting unit that sets a mask region not to be subjected to smoothing processing on a 3D point cloud output from a distance measuring sensor on the basis of an intensity image output from the distance measuring sensor that measures a distance by accumulating reflected light and detecting a phase difference between irradiation light and the reflected light, and
   a smoothing filter processor that performs the smoothing processing on the 3D point cloud output from the distance measuring sensor and outputs the 3D point cloud, in which
   the smoothing filter processor outputs the 3D point cloud of the mask region having been set as it is without performing the smoothing processing.
(2) In the information processing apparatus according to (1),
   the mask region setting unit extracts a characteristic shape from the intensity image and sets the mask region in association with a region of the characteristic shape having been extracted.
(3) In the information processing apparatus according to (2),
   the mask region setting unit sets the mask region in association with the region of the characteristic shape when a contrast of the region of the characteristic shape is equal to or greater than a threshold value.
(4) In the information processing apparatus according to (2) or (3),
   the mask region setting unit sets the mask region in association with the region of the characteristic shape when a distance to the region of the characteristic shape is less than a threshold value.
(5) The information processing apparatus according to any of (1) to (4) further includes
   a behavior determiner that sets an entry prohibition region on the basis of the 3D point cloud output from the smoothing filter processor and determines a behavior of the mobile body.
(6) In the information processing apparatus according to any of (1) to (5),
   the distance measuring sensor includes an iToF distance measuring sensor.
(7) An information processing method includes
   a mask region setting procedure of setting a mask region not to be subjected to smoothing processing on a 3D point cloud output from a distance measuring sensor on the basis of an intensity image output from the distance measuring sensor that measures a distance by accumulating reflected light and detecting a phase difference between irradiation light and the reflected light, and
   a smoothing filter processing procedure of performing the smoothing processing on the 3D point cloud output from the distance measuring sensor and outputs the 3D point cloud, in which
   the smoothing filter processing procedure includes outputting the 3D point cloud of the mask region having been set as it is without performing the smoothing processing.
(8) An information processing system includes
   a display device,
   an instruction device that instructs the display device to display a regular pattern, and
   an information processing apparatus that performs distance measurement in an environment including the display device, in which
   the information processing apparatus includes
   a distance measuring sensor that measure a distance by accumulating reflected light and detecting a phase difference between irradiation light and the reflected light,
   a mask region setting unit that extracts a characteristic shape from an intensity image output from the distance measuring sensor, and sets a mask region not to be subjected to smoothing processing on a 3D point cloud output from the distance measuring sensor in association with the region of the characteristic shape having been extracted, and
   a smoothing filter processor that performs the smoothing processing on the 3D point cloud output from the distance measuring sensor and outputs the 3D point cloud, and
   the smoothing filter processor outputs the 3D point cloud of the mask region having been set as it is without performing the smoothing processing.
(9) In the information processing system according to (8),
   the instruction device includes a user terminal or a network server.
(10) In the information processing apparatus according to (8) or (9),
   the distance measuring sensor includes an iToF distance measuring sensor.

### REFERENCE SIGNS LIST

- 10, 20: Mobile body system
- 100: Autonomous guided vehicle
- 110: Drive control device
- 111: iToF sensor
- 112: Smoothing filter processor
- 113: Behavior determiner
- 114: Drive controller
- 115: Characteristic detector
- 116: Mask region setting unit
- 200: Tape
- 300: Display device
- 310: Tape-shaped black-and-white pattern
- 350: Instruction device

## Claims

1. An information processing apparatus comprising:
a mask region setting unit that sets a mask region not to be subjected to smoothing processing on a 3D point cloud output from a distance measuring sensor on a basis of an intensity image output from the distance measuring sensor that measures a distance by accumulating reflected light and detecting a phase difference between irradiation light and the reflected light; and
a smoothing filter processor that performs the smoothing processing on the 3D point cloud output from the distance measuring sensor and outputs the 3D point cloud, wherein
the smoothing filter processor outputs the 3D point cloud of the mask region having been set as it is without performing the smoothing processing.

2. The information processing apparatus according to claim 1, wherein
the mask region setting unit extracts a characteristic shape from the intensity image and sets the mask region in association with a region of the characteristic shape having been extracted.

3. The information processing apparatus according to claim 2, wherein
the mask region setting unit sets the mask region in association with the region of the characteristic shape when a contrast of the region of the characteristic shape is equal to or greater than a threshold value.

4. The information processing apparatus according to claim 2, wherein
the mask region setting unit sets the mask region in association with the region of the characteristic shape when a distance to the region of the characteristic shape is less than a threshold value.

5. The information processing apparatus according to claim 1, further comprising
a behavior determiner that sets an entry prohibition region on a basis of the 3D point cloud output from the smoothing filter processor and determines a behavior of the mobile body.

6. The information processing apparatus according to claim 1, wherein
the distance measuring sensor includes an iToF distance measuring sensor.

7. An information processing method comprising:
a mask region setting procedure of setting a mask region not to be subjected to smoothing processing for a 3D point cloud output from a distance measuring sensor on a basis of an intensity image output from the distance measuring sensor that measures a distance by accumulating reflected light and detecting a phase difference between irradiation light and the reflected light; and
a smoothing filter processing procedure of performing the smoothing processing on the 3D point cloud output from the distance measuring sensor and outputs the 3D point cloud, wherein
the smoothing filter processing procedure includes outputting the 3D point cloud of the mask region having been set as it is without performing the smoothing processing.

8. An information processing system comprising:
a display device;
an instruction device that instructs the display device to display a regular pattern; and
an information processing apparatus that performs distance measurement in an environment including the display device, wherein
the information processing apparatus includes
a distance measuring sensor that measure a distance by accumulating reflected light and detecting a phase difference between irradiation light and the reflected light,
a mask region setting unit that extracts a characteristic shape from an intensity image output from the distance measuring sensor, and sets a mask region not to be subjected to smoothing processing on a 3D point cloud output from the distance measuring sensor in association with the region of the characteristic shape having been extracted, and
a smoothing filter processor that performs the smoothing processing on the 3D point cloud output from the distance measuring sensor and outputs the 3D point cloud, and
the smoothing filter processor outputs the 3D point cloud of the mask region having been set as it is without performing the smoothing processing.

9. The information processing system according to claim 8, wherein
the instruction device includes a user terminal or a network server.

10. The information processing system according to claim 8, wherein
the distance measuring sensor includes an iToF distance measuring sensor.
